# EUROPEAN PATENT APPLICATION

(11) **EP 4 563 465 A1**
(43) Date of publication of application: **04.06.2025**
(21) Application number: 24215458.1
(22) Date of filing: 26.11.2024
(51) Int. Cl.: B64C 3/18, B64C 1/06, B32B 7/09, B29C 70/22

(54) **ELONGATE AIRCRAFT STRUCTURAL COMPONENT AND METHOD OF FABRICATING AN ELONGATE AIRCRAFT STRUCTURAL COMPONENT**

(30) Priority: 29.11.2023 GB 202318211
(71) Applicant: Airbus Operations Limited, Bristol BS34 7PA (GB)
(72) Inventor: BRYANT, Stuart, Bristol, BS34 7PA (GB); BARNETT, Thomas, Bristol, BS34 7PA (GB)
(74) Representative: EIP

(57) **Abstract**

Disclosed is an elongate aircraft structural component for an aircraft, the elongate aircraft structural component comprising a web and a flange, wherein the flange extends from the web, comprises layers of composite material, and has a length in a direction of a length of the elongate aircraft structural component, a width perpendicular to the length of the flange and a thickness smaller than, and perpendicular to, both the width and the length of the flange, wherein the width of the flange varies along the length of the flange, whereby the flange comprises a wide flange region and a narrow flange region, the narrow flange region having a smaller width than the wide flange region, and wherein the wide flange region comprises stitching interconnecting the layers of composite material, the stitching extending along a path in a direction with at least a component parallel to the width of the flange.

## Description

### TECHNICAL FIELD

The present invention relates to elongate aircraft structural components, such as stringers, and to methods of fabricating elongate aircraft structural components.

### BACKGROUND

Aircraft structural components, such as elongate aircraft structural components, are used in aircraft to provide structural support and strength to elongate parts of the aircraft. Examples of these include aircraft wing stringers used in aircraft wings along their span, or support elements in the fuselage of the aircraft.

### SUMMARY

A first aspect of the present invention provides an elongate aircraft structural component for an aircraft, the elongate aircraft structural component comprising a web and a flange, wherein the flange extends from the web, comprises layers of composite material, and has a length in a direction of a length of the elongate aircraft structural component, a width perpendicular to the length of the flange and a thickness smaller than, and perpendicular to, both the width and the length of the flange, wherein the width of the flange varies along the length of the flange, whereby the flange comprises a wide flange region and a narrow flange region, the narrow flange region having a smaller width than the wide flange region, and wherein the wide flange region comprises stitching interconnecting the layers of composite material, the stitching extending along a path in a direction with at least a component parallel to the width of the flange.

The stitching interconnecting the layers of composite material is provided to hold the layers of composite material together, for example for transport, during manufacturing steps, during installation and/or in service. The stitching comprises one or more stitches in a line. The stitching provides a benefit in increased strength of the flange along the path of the stitching. `Strength' may refer to, for example, a degree of resistance to yield, fracture, fatigue, delamination and/or deformation under tensile loading, shear loading, loading in torsion, compression and/or bending. The stitching extending along a path in the direction with at least a component parallel to the width of the flange therefore results in increased strength of the flange in its width direction. The increased strength of the flange in its width direction may, for example, increase the flange's resistance to loading in its width direction. The increased strength of the flange in its width direction may be tailored by changing or suitably selecting a magnitude of the component of the direction of the path of the stitching in the flange width direction.

Optionally, the layers of composite material comprise layers of fibre composite material. The fibre composite material may comprise pre-impregnated (also known as 'pre-preg') fibres or `dry' fibres. Dry fibres may be infused with a matrix material, such as a resin material, prior to or after the stitching is introduced.

Optionally, the layers of fibre composite material comprise, or consist of, carbon fibres.

Optionally, the web comprises layers of composite material.

Optionally, the layers of fibre composite material comprise unidirectional-fibre layers, having continuous fibres orientated along the length of the flange, and chopped strand layers, having discontinuous fibres orientated in a plurality of directions within a plane of each respective chopped strand layer.

The unidirectional-fibre layers provide strength in a direction along the length of the flange, and therefore along the length of the elongate aircraft structural component. The chopped strand layers provide strength along the plurality of directions within a plane of the flange defined by the length and the width of the flange. Chopped strand layers are used in place of conventional secondary unidirectional-fibre layers. Such secondary unidirectional-fibre layers may be, for example, orientated at 45° or 90° to the unidirectional-fibre layers. The conventional secondary unidirectional-fibre layers provide strength in the direction of the fibres they contain. Chopped strand layers may comprise recycled materials, and may therefore be more environmentally friendly and economical than the conventional secondary unidirectional-fibre layers that may require virgin fibres. Chopped strand layers may replace the secondary unidirectional-fibre layers to provide strength in the width direction of the flange.

Optionally, at least 50% of the layers of composite material in the flange are the unidirectional-fibre layers. This may help to provide adequate strength in the direction along the length of the flange.

Optionally, the wide flange region comprises a hole for receiving a fastener for fastening the flange to a skin section of the aircraft.

The flange may comprise a plurality of wide flange regions, spaced apart along the length of the flange with a narrow flange regions in between each adjacent pair of the wide flange regions. These wide flange regions may be spaced apart at regular or irregular intervals. The wide flange regions may correspond, for example, to locations along the elongate aircraft structural component where the elongate aircraft structural component is to pass through ribs of an aircraft structure, such as a wing. Providing the hole may weaken the layers of composite material in the wide flange region. Embodiments of the present invention may help increase the strength of the wide flange region to compensate for and mitigate such weakening.

Optionally, the hole does not interrupt the stitching. The stitching is therefore able to retain its structure and robustness.

Optionally, the stitching surrounds the hole. This may help to reinforce the hole, and may compensate for a weakening of the layers of composite material imposed by providing the hole.

Optionally, the stitching comprises a plurality of parallel stitchings (i.e., a plurality of lines of stitches) interconnecting the layers of composite material. Such an arrangement may be manufactured relatively easily, compared to an arrangement comprising a plurality of non-parallel stitchings. For example, to produce non-parallel stitchings, stitching equipment may need to be reset with new instructions after each change in angle, or more complex equipment may be necessary.

Optionally, the stitching comprises a plurality of intersecting stitchings. The intersecting stitchings may provide more strength than non-intersecting stitchings.

Optionally, the direction has equal components in a direction of the width of the flange and a direction of the thickness of the flange. This provides strengthening along the width of the flange and the thickness of the flange. In an example where unidirectional-fibre layers are used, with fibres orientated along the direction of the length of the flange, the stitching provides strengthening in the width and thickness directions.

Optionally, the direction has a component parallel to the length of the flange. This may provide increased strength along the length of flange.

Optionally, the elongate structural component is an aircraft stringer. The aircraft stringer may be used as an element to which a skin section of a wing or a fuselage is to be attached for structural support. Aircraft stringers may have different cross-sectional shapes, such as a T-shape, an L-shape or an Ω-shape, for example.

Optionally, the narrow flange region also comprises stitching interconnecting the layers of composite material.

A second aspect of the present invention provides an aircraft structural assembly, comprising the elongate aircraft structural component according to the first aspect, and a skin section affixed to the flange of the elongate aircraft structural component.

This may be achieved by, for example, affixing the flange of the aircraft structural component, at a face of the flange opposite to a face where the flange extends from the web, to the skin section. Affixing the flange may be achieved by mechanical fasteners, such as bolts or rivets, or using a welding process (if the flange is of a weldable material) or an adhesive process or any other suitable method. The affixing may be done at the wide flange portion or portions. The aircraft structural assembly may, for example, be a wing and/or a fuselage for the aircraft.

A third aspect of the present invention provides an aircraft comprising the aircraft structural assembly according to the second aspect.

A fourth aspect of the present invention provides a method of fabricating an elongate aircraft structural component for an aircraft, the method comprising: providing a web; and providing a flange extending from the web, comprising layers of composite material, and having a length in a direction of a length of the elongate aircraft structural component, a width perpendicular to the length of the flange and a thickness smaller than, and perpendicular to, both the width and the length of the flange, wherein the width of the flange varies along the length of the flange, whereby the flange comprises a wide flange region and a narrow flange region, the narrow flange region having a smaller width than the wide flange region; and providing stitching interconnecting the layers of composite material in the wide flange region, the stitching extending along a path in a direction with at least a component parallel to the width of the flange.

The method permits fabrication of the aircraft structural component according to the first aspect of the present invention.

Optionally, the providing the flange comprises providing unidirectional-fibre layers, having continuous fibres orientated along the length of the flange, and chopped strand layers, having discontinuous fibres orientated in a plurality of directions within a plane of each respective chopped strand layer.

Optionally, the method comprises providing the wide flange region with a hole for receiving a fastener for fastening the flange to a skin section of the aircraft.

Optionally, the providing the wide flange region with a hole comprises providing the hole such that the hole does not interrupt the stitching.

Optionally, the providing the wide flange region with a hole comprises providing the hole such that the stitching surrounds the hole.

Optionally, the providing the stitching comprises providing a plurality of parallel stichings interconnecting the layers of composite material.

Optionally, the providing the stitching comprises providing a plurality of interconnecting stichings.

Optionally, the providing the stitching comprises providing stitching in a direction with equal components in a direction along the width of the flange and a direction along the thickness of the flange.

Optionally, the providing the stitching comprises providing stitching in a direction with at least a component parallel to the length of the flange.

Optional features of any one of the aspects of the present invention may be applied equally to any other one of the aspects of the present invention, where appropriate.

### BRIEF DESCRIPTION OF THE DRAWINGS

Embodiments of the invention will now be described, by way of example only, with reference to the accompanying drawings, in which:
Figure 1 shows a schematic view of an aircraft according to an example embodiment of the present invention.
Figure 2 shows an aircraft structural assembly according to an example embodiment of the present invention.
Figures 3A to 3C show, respectively, a side view of an aircraft structural component according to an example embodiment of the present invention, a cross-sectional view of the same, and a top-down view of the same.
Figures 4A to 4C show, respectively, a unidirectional fibre composite layer, a chopped-strand composite layer, and an example of a composite layup.
Figure 5 shows a cross- sectional view through a laminate of a flange of the aircraft structural component of Figure 3C, comprising an example stitching according to an example embodiment of the present invention.
Figure 6 shows a cross-sectional view through a laminate of a flange of the aircraft structural component of Figure 3C, comprising an alternative example stitching according to an example embodiment of the present invention.
Figure 7 show top-down view of a section of the aircraft structural component of Figure 3C, showing an example of stitching according to an example embodiment of the present invention.
Figure 8 show top-down view of a section of the aircraft structural component of Figure 3C, showing an example of stitching according to an example embodiment of the present invention.
Figure 9 shows an example method of fabricating an elongate aircraft structural component, according to an example embodiment of the present invention.

### DETAILED DESCRIPTION

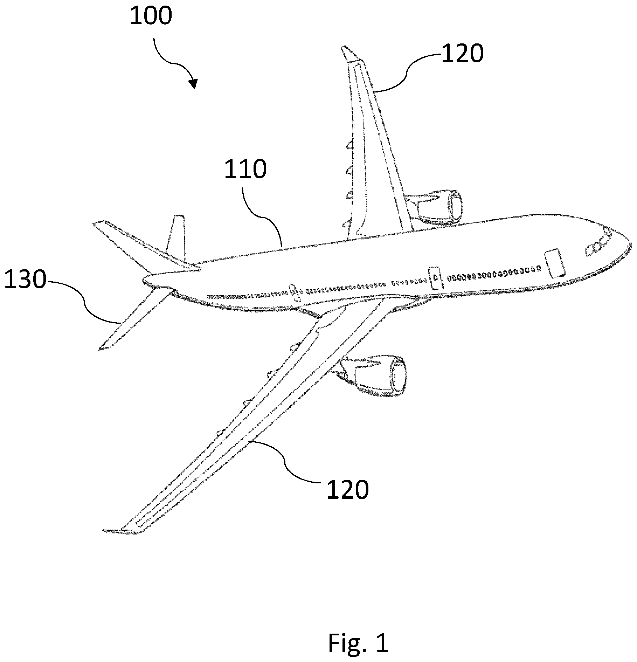

Figure 1 shows an aircraft 100 according to an example of the invention. The aircraft has multiple structural assemblies that benefit from improved elongate aircraft structural components. Such assemblies are included in the fuselage 110, the wings 120, and the tail 130.

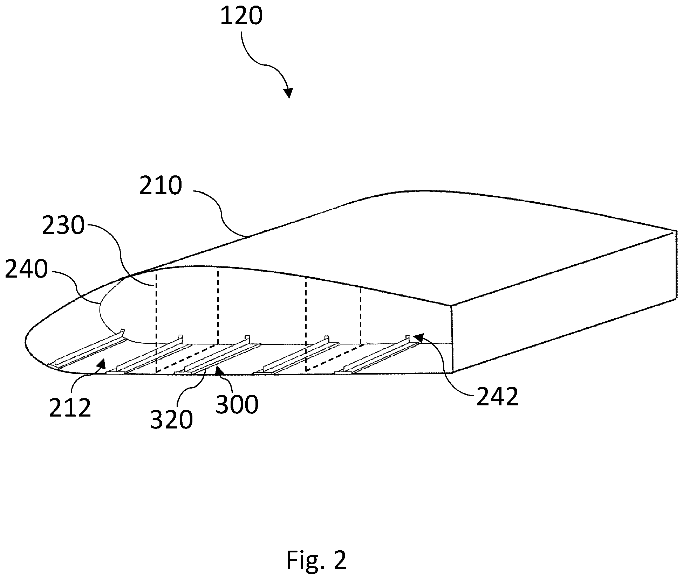

A cross section through one of the wings 120 of the aircraft 100 is shown in Figure 2. The wing 120 is an aircraft structural assembly and comprises a skin section 210 defining its outer surface, spars 230 (shown in dashed lines in Figure 2) and ribs 240 (only one of which is visible in Figure 2) supporting the skin section 210, and a series of stringers 300. The rib 240 has openings 242 through which the stringers 300 pass. The stringers 300 are attached to the inner surface 212 of the skin section 210 at their respective flanges 320 (described below). This is achievable by mechanical joining, for example by mechanical fasteners such as rivets or bolts (not shown). Alternatively, other joining methods such as adhesives or welding can be envisaged. A stringer is an example of an elongate aircraft structural component.

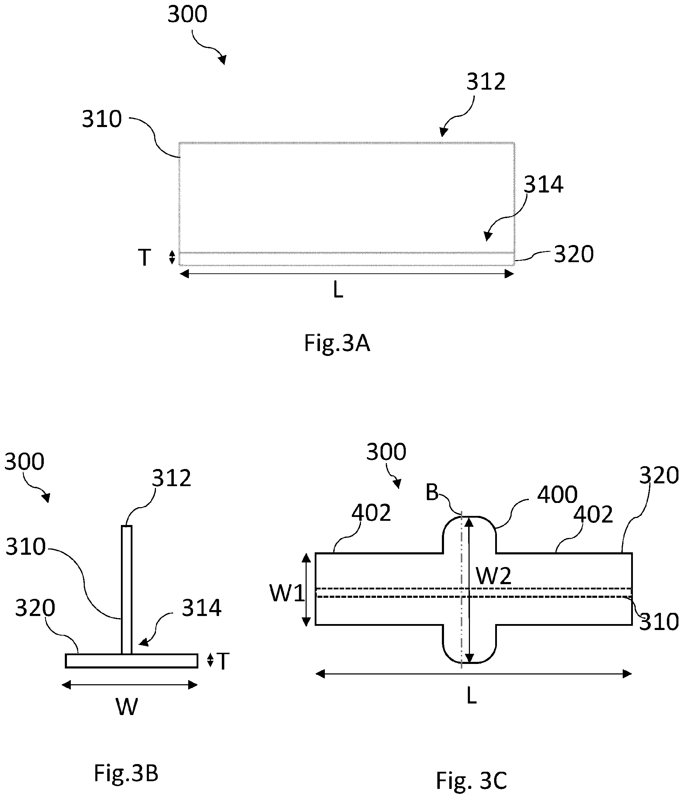

An elongate aircraft structural component according to an embodiment of the present invention is shown in Figure 3A. In this example embodiment, the component one of the stringers 300 shown in Figure 2. In other embodiments, the aircraft structural component may be another component, such as a spar. The stringer 300 (and the rest of the stringers 300) is provided in the wing 120, to provide structural support and must therefore be adapted to withstand the loads the wing 120 is exposed to both on the ground and in flight.

The stringer 300 comprises a web 310. A flange 320 extends perpendicularly from a first end 314 of the web 310, and the web 310 also has a second end 312 distal from the flange 320. The flange 320 has a length L and a thickness T perpendicular to the length L. The stringer 300 is depicted in a cross-sectional view in Figure 3B, where it is shown that the web 320 also has a width W. The width W is perpendicular to both the thickness T and the length L, and is also perpendicular to the web 310. The length L is parallel to a length of the overall stringer 300.

A further view of the stringer 300 is shown in Figure 3C, viewed top-down in a direction of the thickness T of the flange 320, with the web 310 shown in dashed lines. In this embodiment, the web 310 and the flange 320 provide the stringer 300 with a upside down 'T'-shape cross section, as best understood from Figure 3B. Other arrangements are possible, and may be desirable for different structural applications. In other examples, the cross section may, for example, have an 'L'-shape or an 'Q'-shape.

The flange 320 comprises plural wide flange regions 400, also known as `grow-outs', (only one of which is shown in Figure 3C) and narrow flange regions 402 either side of the grow-outs 400. At each of the grow-outs 400, the flange 320 has a width W2, which is greater than a width W1 of the flange 320 at the narrow flange regions 402. The grow outs 400 are spaced apart such that the flange 320 alternates between sections with width W1 and sections with width W2 along the length L. In this example, W2 is about 1.7 times W1. In other embodiments of the flange, width W2 may be, for example 1.2 times width W1, 1.3 times width W1, 1.5 times width W1 or 2 times width W1.

The grow-outs 400 are spaced apart at regular intervals, reflecting the spacing of the ribs 240 in the aircraft wing 120. The grow-outs 400 are provided to facilitate the attachment of the flange 320 to the inner surface 212 of the skin section 210 by increasing the surface area available. If, for example, a bolt hole were to be provided in a flange of a stringer without a grow-out, the flange may become too weakened to adequately perform. In other examples, other configurations of grow-out or grow-outs are possible.

The stringer 300 is made of a carbon fibre composite material, in this example embodiment. Other materials from which the stringer 300 of other embodiments could be made include, for example, other fibre composite materials such as glass fibre, or other composite materials. Composite materials are employed for aircraft components as they are lightweight and have favourable mechanical properties, such as strength and stiffness.

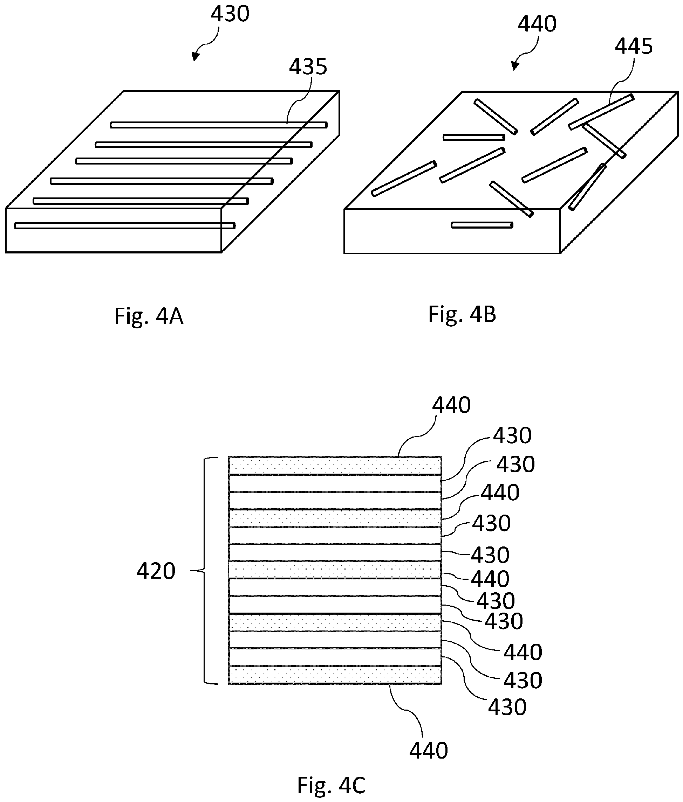

Composite materials, such as carbon fibre composite materials or glass fibre composite materials, may be formed from layers stacked to form laminate structure. An example of a layer of composite material is shown in Figure 4A, and is a unidirectional-fibre layer 430. The unidirectional-fibre layer 430 comprises carbon fibres 435 arranged side-by-side and aligned parallel to each other. A unidirectional-fibre layer 430 is stronger in a direction along the fibres 435 than in other directions. A composite laminate or layup structure would conventionally be composed solely of such unidirectional-fibre layers at different relative orientations to provide adequate strength in all directions.

A second example layer of composite material is shown in Figure 4B, and is a chopped-strand layer 440. The chopped-strand layer 440 comprises carbon fibres 445 that are relatively shorter than fibres 435 in the unidirectional-fibre layer 430. Each of the fibres 445 is 10mm to 100mm long in this example. The fibres 445 are arranged within a plane of the layer 440 but are aligned in random directions relative to each other, or at least in a plurality of directions. Thus, a single chopped-strand layer 440 has approximately equal strength in all directions within the plane of the chopped-strand layer 440.

A mixed layup 420 may be provided that comprises plural ones of each of the unidirectional-fibre layer 430 and the chopped-strand layer 440, as shown in Figure 4C. The unidirectional fibres 435 in all the unidirectional-fibre layers 430 are all aligned in one direction, into the page in Figure 4C, and the chopped strand fibres 445 within the chopped strand layers 440 provide strength in the other directions. The mixed layup 420 comprises one or two of the unidirectional-fibre layers 430 between pairs of the chopped-strand layers 440, and terminates at each of two opposite faces of the mixed layup 420 with respective ones of the chopped-strand layers 440. A total number of the layers in the mixed layup 420 is 13.

In other embodiments, fewer or more of the unidirectional-fibre layers 430 and/or the chopped-strand layers 440 may be provided in the mixed layup, and/or different ratios of the unidirectional-fibre layers 430 and the chopped-strand layers 440 may be present. Preferably, at least half of the total number of layers are to be unidirectional-fibre layers 440. In some examples, different stacking sequences of the unidirectional-fibre layers 430 and the chopped-strand layers 440 are possible. Preferably, pairs of immediately-adjacent ones of the chopped-strand layers 440 are separated by at least one of the unidirectional-fibre layers 430. In other examples, the unidirectional fibres 435 in all the unidirectional-fibre layers 430 may not all be aligned in a single direction; they may be orientated in two or more directions. The layers in a mixed layup may be of dissimilar thickness. For example, some or each of the chopped strand layers 440 may have a smaller thickness than each of the unidirectional-fibre layers 430, or vice versa.

The stringer 300 comprises the mixed layup 420 such that the fibres 435 of the unidirectional fibre layers 430 align with the length L of the flange 320 of the stringer 300, and the layers 430 and 440 of the mixed layup 420 are stacked in the direction of the thickness of the flange 320. In other examples of an elongate aircraft structural component, other mixed layups are possible, as well as conventional unidirectional-fibre layer only layups, or other layered composite materials or structures.

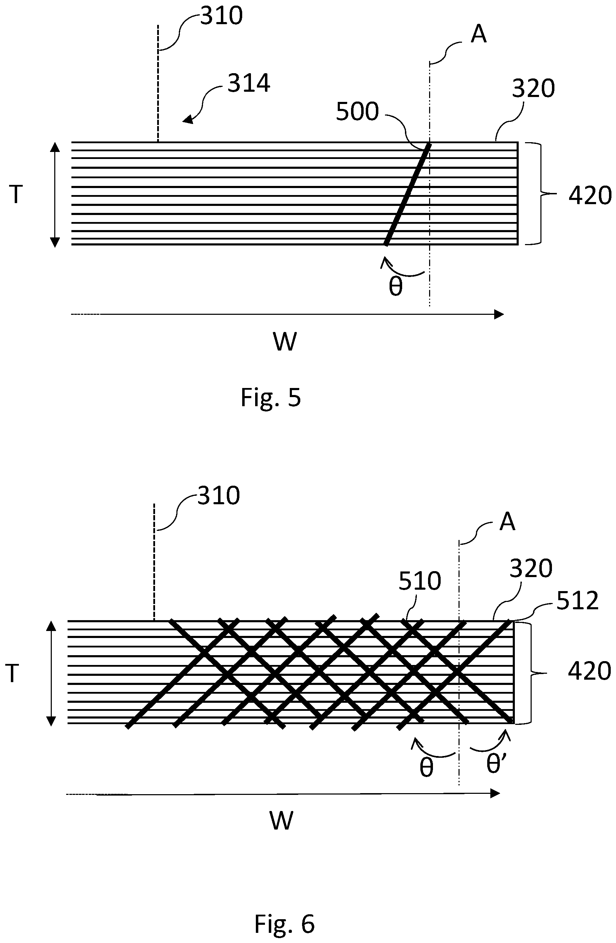

A cross-sectional view through the mixed layup 420 of the flange 320 in Figure 3C is shown in Figure 5. For clarity, only one half of the flange 320 and an edge of the first end 314 of the web 310 are shown. The flange 320 comprises the mixed layup 420 shown in Figure 4C. In this example, the fibres of the unidirectional-fibre layers of the mixed layup 420 lie perpendicularly to both the thickness T and the width W of the flange, into the page in Figure 5. This is not shown for clarity.

The flange 320 comprises stitching 500 (i.e., a line of stitches) through the mixed layup 420. The stitching 500 connects the layers of the mixed layup 420. The stitching 500 lies at an angle θ from an axis A that is parallel to the thickness T of the flange 320. Thus, the stitching 500 lies or extends along a path with a direction with a component in the direction of the width W and with a component in the direction of the thickness T. By varying angle θ, the component in the direction of the width W may be varied. A greater component in the direction of the width W results in a greater strength provided to the flange 320 in that direction. In the example of Figure 5, angle θ is about 30°. In other examples, angle θ may be any other angle, such as an greater than 0° and smaller than 90°, such as for example 45°.

In other examples, the flange 320 comprises a plurality of stitchings (i.e., a plurality of lines of stitches). The plurality of stitchings may be oriented at dissimilar angles. An example is shown in Figure 6. This is a cross-sectional view through a flange. In this example, the flange 320 also comprises the mixed layup 420 shown in Figure 4C. The layers of the mixed layup 420 are interconnected by stitchings of two types. The first type 510 of stitching is at an angle θ from the axis A. A series of parallel stitchings of the first type 510 are spaced apart in the direction of the width W of the flange 320. A second type 512 of stitching is at an angle θ' to the axis A. A series of parallel stitchings of the second type 512 are spaced apart in the direction of the width W of the flange 320, and each intersects one or more stitches from the series of parallel stitchings of the first type 510. In this example, the angle θ is about 45° clockwise and the angle θ' is about 45° anticlockwise, as is shown by the arrows in Figure 6. Therefore, the first type of stitching 510 lies perpendicularly to the second type of stitching 512.

In alternative examples, the angles θ and θ' may have unequal magnitudes. For example, each of angle θ and angle θ' may have any magnitude greater than 0° and smaller than 90°, and be either clockwise or anticlockwise. In other examples, there may be more than two types of stitchings. In other examples, there may only be one series of parallel stitchings. In other examples, the stitchings do not intersect one another. In other examples, the stitchings are not parallel to one another.

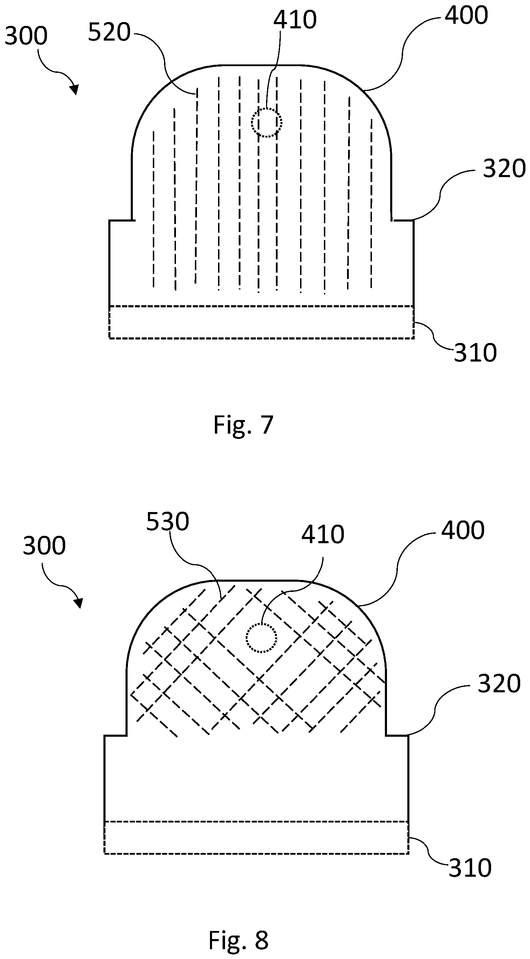

A top-down view of the grow-out 400 of the flange 320 is shown in Figure 7. This is a close-up view of a portion of Figure 3C in which only one side of the grow-out 400 is visible. The grow-out 400 comprises a hole 410 to accommodate a fastener, such as for example a bolt, when the stringer 300 is attached to the skin section 210, as described with reference to Figure 2. The grow-out 400 may be located, for example, in the rib opening 242 or between the ribs 240 along the stringer 300 when the stringer 300 is in place in the wing 120.

In other examples, there may be no hole in the grow-out 400, or there may be a plurality of holes for receiving respective fasteners. The hole 410 in the present embodiment is threaded, but may not be so in other embodiments, depending on what kind of fastener it is configured to receive.

The grow-out 400 comprises plural parallel stitchings 520, each of which extends or runs along a path in a direction with components only along the width W and the thickness T of the flange 320.

In other examples, such as the example shown in Figure 8, each of plural stitchings lies along a path that extends in a direction that also has a component in the direction of the length L of the flange 320. In the example of Figure 8, the stitchings 530 lie along two orientations when viewed in a top-down view, and the stitchings 530 intersect one another. In this example, the stitchings 530 surround the hole 410 for receiving a fastener, such that the rows of stitches of the stitchings 530 are not interrupted by the hole 410. As a result, the hole 410 has edges that are reinforced against mechanical failure.

In other embodiments of the present invention, the flange 320 may comprise one or more stitchings outside the grow-out 400 region.

In other embodiments of the present invention, the web 310 may also comprise a mixed layup and/or stitchings as described with respect to the above examples.

The stitchings described with respect to the above examples comprise thread of polyester material, with a thickness of 0.05mm. In other embodiments of the present invention, other flexible polymer materials such as polyamide, carbon fibre or glass fibre and other thicknesses, for example 0.05mm to 0.2mm, are possible.

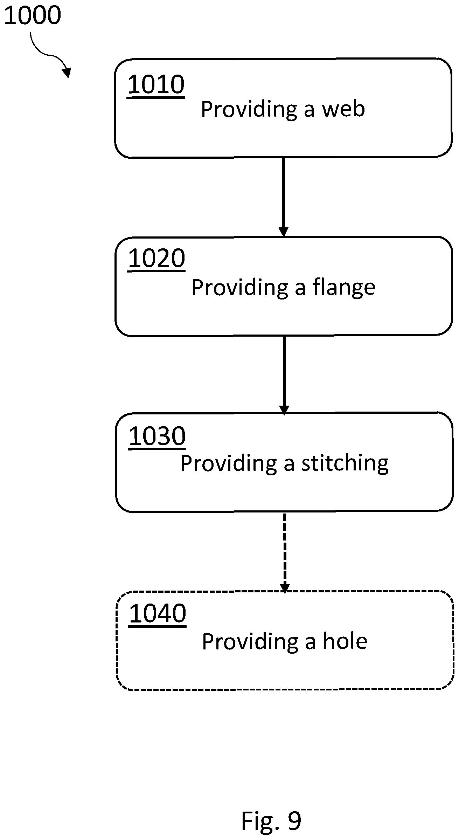

Figure 9 shows an example method according to the invention. The method 1000 is a method of fabricating an elongate aircraft structural component. In this example, the method 1000 is a method of fabricating the stringer 300 described above.

The method 1000 comprises providing 1010 the web 310.

The method 1000 further comprises providing 1020 the flange 320.

The providing 1010 the web and the providing 1020 the flange comprise forming the respective web and flange from the mixed layup 420. In this embodiment, the providing 1010 the web and the providing 1020 the flange happen concurrently. In other embodiments, the providing 1010 the web may be preceded by, or followed by, the providing 1020 the flange.

The method 1000 comprises providing 1030 stitching in the grow-out 400 of the flange 320. In this example, the stitching is arranged as shown in Figure 8. The providing 1030 the stitching is achieved by automated sewing, with tufting needles positioned at the angles of the stitching. In other examples, the sewing may be performed manually or in any other way.

The method 1000 comprises providing 1040, by machining, a threaded hole 410 for receiving a fastener in the grow-out 400. The providing 1040 a hole happens after the providing 1030 a stitching in this embodiment, but in other embodiments it may be followed by, or happen concurrently with, the providing 1030 a stitching. In other examples, the providing 1040 the hole may comprise providing a plurality of holes in the grow-out 400, wherein the plurality of holes can be the same or dissimilar. In some examples, no such hole 410 may be provided.

In other example methods, other processes are envisaged. For example, a resin infusion step, in which dry fibres of the layers of composite material are infused with a resin material, may be performed. The resin infusion may be preceded by or followed by the providing 1030 the stitching, and/or preceded by or followed by the providing 1040 the hole. In some such embodiments, the stitching may additionally help stabilise the layers during the resin infusion step. When such a resin infusion process is performed, it may be followed by a resin curing process. A resin curing process may also be used in embodiments in which a pre-preg type composite is used in place of dry fibres, and where a resin infusion process is absent.

It is to be noted that the term "or" as used herein is to be interpreted to mean "and/or", unless expressly stated otherwise.

## Claims

1. An elongate aircraft structural component for an aircraft, the elongate aircraft structural component comprising a web and a flange,
wherein the flange extends from the web, comprises layers of composite material, and has a length in a direction of a length of the elongate aircraft structural component, a width perpendicular to the length of the flange and a thickness smaller than, and perpendicular to, both the width and the length of the flange,
wherein the width of the flange varies along the length of the flange, whereby the flange comprises a wide flange region and a narrow flange region, the narrow flange region having a smaller width than the wide flange region, and
wherein the wide flange region comprises stitching interconnecting the layers of composite material, the stitching extending along a path in a direction with at least a component parallel to the width of the flange.

2. The elongate aircraft structural component according to claim 1, wherein the layers of composite material comprise layers of fibre composite material, and optionally the layers of fibre composite material comprise carbon fibres.

3. The elongate aircraft structural component according to claim 2, wherein the layers of fibre composite material comprise unidirectional-fibre layers, having continuous fibres orientated along the length of the flange, and chopped strand layers, having discontinuous fibres orientated in a plurality of directions within a plane of each respective chopped strand layer, and optionally at least 50% of the layers of composite material in the flange are the unidirectional-fibre layers.

4. The elongate aircraft structural component according to any one of the preceding claims, wherein the wide flange region comprises a hole for receiving a fastener for fastening the flange to a skin section of the aircraft, and optionally the hole does not interrupt the stitching, and/or the stitching surrounds the hole.

5. The elongate aircraft structural component according to any one of the preceding claims, wherein the stitching comprises a plurality of parallel stitchings interconnecting the layers of composite material, and/or the stitching comprises a plurality of intersecting stitchings.

6. The elongate aircraft structural component according to any one of the preceding claims, wherein the direction of the path has equal components in a direction of the width of the flange and a direction of the thickness of the flange, and/or the direction of the path has a component parallel to the length of the flange.

7. The elongate aircraft structural component according to any one of the preceding claims, wherein the elongate structural component is an aircraft stringer.

8. The elongate aircraft structural component according to any one of the preceding claims, wherein the narrow flange region also comprises stitching interconnecting the layers of composite material.

9. An aircraft structural assembly, comprising:
the elongate aircraft structural component according to any one of claims 1 to 8; and
a skin section affixed to the flange of the elongate aircraft structural component.

10. An aircraft comprising the aircraft structural assembly according to claim 9.

11. A method of fabricating an elongate aircraft structural component for an aircraft, the method comprising:
providing a web; and
providing a flange extending from the web, comprising layers of composite material, and having a length in a direction of a length of the elongate aircraft structural component, a width perpendicular to the length of the flange and a thickness smaller than, and perpendicular to, both the width and the length of the flange, wherein the width of the flange varies along the length of the flange, whereby the flange comprises a wide flange region and a narrow flange region, the narrow flange region having a smaller width than the wide flange region; and
providing stitching interconnecting the layers of composite material in the wide flange region, the stitching extending along a path in a direction with at least a component parallel to the width of the flange.

12. The method according to claim 11, wherein the layers of composite material comprise unidirectional-fibre layers, having continuous fibres orientated along the length of the flange, and chopped-strand layers, having discontinuous fibres orientated in a plurality of directions within a plane of each of the respective chopped-strand layers.

13. The method according to claim 11 or claim 12, wherein the method comprises providing the wide flange region with a hole for receiving a fastener for fastening the flange to a skin section of the aircraft, and optionally the providing the wide flange region with a hole comprises providing the hole such that the hole does not interrupt the stitching, and/or the providing the wide flange region with the hole comprises providing the hole such that the stitching surrounds the hole.

14. The method according to any one of claims 11 to 13, wherein the providing the stitching comprises providing a plurality of parallel stitchings interconnecting the layers of composite material, and/or the providing the stitching comprises providing a plurality of intersecting stitchings.

15. The method according to any one of claims 11 to 14, wherein the providing the stitching comprises providing stitching in a direction with equal components in a direction along the width of the flange and a direction along the thickness of the flange, and/or the providing the stitching comprises providing stitching in a direction with at least a component parallel to the length of the flange.
